# EUROPÄISCHE PATENTSCHRIFT

(11) **EP 1 837 730 B1**
(45) Veröffentlichungstag und Bekanntmachung des Hinweises auf die Patenterteilung: **24.12.2014**
(21) Anmeldenummer: 07004824.4
(22) Anmeldetag: 08.03.2007
(51) Int. Cl.: G05D 23/19, G05D 23/24, B60H 1/22, F23N 5/24

(54) **Heizgerät mit Überhitzungsschutz und Verfahren zum Bereitstellen eines für den Überhitzungsschutz verwertbaren Signals**
Heater with overheating protection and method for providing a utilisable overheating protection signal
Appareil de chauffage doté d'une protection anti-surchauffe et procédé destiné à la préparation d'un signal utilisable pour la protection anti-surchauffe

(30) Priorität: 21.03.2006 DE 102006012957
(43) Veröffentlichungstag der Anmeldung: 26.09.2007
(73) Patentinhaber: Spheros GmbH, 82205 Gilching (DE)
(72) Erfinder: Wardenga, Hans-Michael, 17039 Neddemin (DE)
(74) Vertreter: Strasser, Wolfgang

(56) Entgegenhaltungen:
- US-A- 4 726 514
- US-A- 5 361 215
- US-A- 5 788 148

## Beschreibung

Die Erfindung betrifft ein Heizgerät der im Oberbegriff von Anspruch 1 beschriebenen Art sowie ein Verfahren zum Bereitstellen eines Überhitzungsschutzes für ein Heizgerät gemäß dem Oberbegriff von Anspruch 2.

Derartige Heizgeräte gewinnen im Kraftfahrzeugbereich zunehmend an Bedeutung. Sie können als reine Standheizungen sowie als Zusatzheizungen realisiert sein, die sowohl im Stand als auch während des Betriebs des Verbrennungsmotors betrieben werden. Ebenfalls sind reine Zuheizer bekannt. Den Heizgeräten ist gemeinsam, dass sie eine eigene Wärmequelle besitzen, die im Allgemeinen durch einen den Kraftstoff des Fahrzeugs nutzenden Brenner bereitgestellt wird. Ebenfalls ist bekannt, insbesondere bei Bussen, separate Heizöltanks vorzusehen, aus welchen der Brennstoff für die Zusatzheizung entnommen wird. Die von dem Brenner gelieferte Wärmeenergie wird über ein Wärmeträgermedium abgeführt, das flüssig oder gasförmig sein kann. Bei gasförmigen Wärmeträgermedien kommt insbesondere Luft in Betracht, die direkt dem Innenraum des Kraftfahrzeugs zur Erwärmung desselben zugeführt wird. Als flüssiger Wärmeträger dient in der Regel Wasser, insbesondere mit üblichen Frost- und Korrosionsschutzzusätzen.

Bei allen Heizgeräten muss die Systemsicherheit gegen eine Havarie durch Überhitzung, zum Beispiel bei einem Ausfall der Heizungsregelung, bei ungenügender Durchströmung des Wärmetauschers oder bei ungeeignetem oder nicht vorhandenem Wärmeträgermedium durch Maßnahmen zum Überhitzungsschutz sichergestellt sein. Eine solche Realisierung eines Überhitzungsschutzes erfolgt im Allgemeinen über einen Temperatursensor, einen Bimetallschalter oder einen Schmelzeinsatz. Außerdem ist es wichtig, die Temperatur des Wärmeträgermediums im Hinblick auf die Steuerung beziehungsweise Regelung des Heizgeräts zu erfassen. Bisher wurden zur Überhitzungssicherung und Temperaturmessung im Allgemeinen mindestens zwei Sensoren verwendet, so für den Überhitzungsschutz ein PTC, ein Bimetallschalter oder ein Schmelzeinsatz und für die Temperaturermittlung ein temperaturabhängiger Widerstand. Die Verwendung eines einzigen Sensorelements für beide Funktionen ist aus Sicherheitsgründen nicht zulässig. Außerdem ist eine im Hinblick auf die im Allgemeinen softwarebasierte Auswertung redundante Auswertungsmöglichkeit unabhängig von der Software zur Bereitstellung des Überhitzungsschutzes vorzusehen.

Die DE 44 46 829 A1 beschreibt ein Heizgerät, in dem die erforderlichen Vorkehrungen im Hinblick auf den Überhitzungsschutz und die Temperatursteuerung beziehungsweise -regelung getroffen wurden. Insbesondere wird zum Zwecke der frühzeitigen Erkennung eines Überhitzungszustandes auch die Differenz der an den beiden Temperatursensoren ermittelten Temperaturen herangezogen. In Abhängigkeit der Anordnung der Temperatursensoren lässt eine hohe Temperaturdifferenz nämlich relativ sicher auf einen raschen Temperaturanstieg schließen, der wiederum mit hoher Wahrscheinlichkeit in einem Überhitzungszustand gipfeln kann, sofern nicht frühzeitig Gegenmaßnahmen, das heißt insbesondere das Herunterfahren der Heizleistung beziehungsweise das vollständige Abschalten der Heizung, ergriffen werden. Um ein unterschiedliches Temperaturverhalten der Temperatursensoren im Falle eines Temperaturanstiegs sicherzustellen, also die Voraussetzung für eine signifikante Temperaturdifferenz, müssen die Temperatursensoren an geeigneten Orten angeordnet werden. Gemäß der DE 44 46 829 A1 wird diesbezüglich vorgeschlagen, dass der Überhitzungstemperatursensor in Kontakt mit dem Gasmantel am Flammrohrende und der Wärmeträgertemperatursensor an einer anderen Stelle im Wärmeträgerbereich angeordnet ist, beispielsweise in der Nähe des Wärmeträgereinlasses, des Wärmeträgerauslasses oder an einer sonstigen Position mit größerem Abstand vom Gasmantel als der Überhitzungstemperatursensor. Somit entstehen durch die nützliche Auswertemöglichkeit der Temperaturdifferenz konstruktive Randbedingungen.

Der Erfindung liegt die Aufgabe zugrunde, ein Heizgerät und ein Verfahren zum Bereistellen eines Überhitzungsschutzes zur Verfügung zu stellen, wobei die Möglichkeit der Auswertung einer Temperaturdifferenz im Hinblick auf den Überhitzungsschutz ohne den Nachteil zusätzlicher konstruktiver Randbedingungen bereitgestellt werden kann.

Diese Aufgabe wird mit den Merkmalen der Ansprüche 1 bzw. 2 gelöst.

Die Erfindung baut darauf auf, dass der erste Temperatursensor eine geringere thermische Trägheit als der zweite Temperatursensor aufweist. Im Falle eines raschen Temperaturanstiegs wird der erste Temperatursensor daher sehr viel schneller eine gestiegene Temperatur melden als der zweite Temperatursensor. Folglich wird eine scheinbare Temperaturdifferenz zwischen den Temperatursensoren erfasst. Übersteigt diese einen Schwellenwert, so können Gegenmaßnahmen, beispielsweise das Abschalten des Heizgerätes, ergriffen werden.

Zum Auswerten der Sensorsignale ist ein Steuergerät vorgesehen ist. Die Auswertung der Sensorsignale kann somit softwaretechnisch realisiert werden.

Zumindest das erste Sensorsignal kann separat zur Bereitstellung eines Überhitzungsschutzes berücksichtigt werden. Der Überhitzungssensor kann demnach in herkömmlicher Weise eingesetzt werden, insbesondere durch Vergleich der von ihm ermittelten Temperatur mit einem Temperaturschwellenwert. Gleichermaßen kann aber auch der andere Temperatursensor, der an sich in erster Linie zu Steuerungs- und Regelungszwecken eingesetzt wird, durch Vergleich dessen Ausgangssignals mit einer Temperaturschwelle zum Zwecke eines zusätzlichen Überhitzungsschutzes eingesetzt werden.

Zumindest das erste Sensorsignal kann zusätzlich zur Auswertung durch das Steuergerät unabhängig von dem Steuergerät auswertbar sein. Es liegt dann eine redundante Signalverarbeitung vor, indem das Sensorsignal beispielsweise nicht nur dem Steuergerät sondern weiterhin einem einfachen Komparator zugeführt wird, über dessen Ausgangssignal dann gegebenenfalls entsprechende Maßnahmen eingeleitet werden, wiederum über das Steuergerät und/oder auf direktem Weg.

Zusätzlich zum Vergleich der von den Sensoren ermittelten Temperatur mit einer Temperaturschwelle kann der Temperaturgradient von zumindest dem ersten Sensorsignal zur Bereitstellung eines Überhitzungsschutzes berücksichtigt werden.

Dadurch, dass die Temperatursensoren unterschiedliche Temperatur-Widerstands-Kennlinien aufweisen, können die Temperatursensoren im Hinblick auf ihre eigentlichen Aufgaben optimiert werden. Der eine Temperatursensor kann beispielsweise eine starke Abhängigkeit des Widerstandes von der Temperatur aufweisen, so dass er auf geringe Temperaturdifferenzen empfindlich reagiert, während der andere Temperatursensor eine geringere Abhängigkeit zeigt und so für große Temperaturänderungen besonders nützlich einsetzbar ist. Das korrekte Funktionieren der Sensorelemente kann vor Beginn des Heizvorganges überprüft werden, indem die aus den Widerstandswerten der Sensoren ermittelten Temperaturen miteinander verglichen werden. Liegt die Abweichung der ermittelten Temperaturen zueinander nicht innerhalb einer vorgegebenen Toleranz, ist von einem Defekt eines der Sensorelemente auszugehen.

Dadurch, dass die Temperatursensoren in einem gemeinsamen Gehäuse untergebracht sind, können zwei Temperatursensoren durch die Montage eines einzigen Bauteils in das Heizgerät eingebracht werden.

Dadurch, dass der erste Temperatursensor näher an der Wärmequelle angeordnet ist als der zweite Temperatursensor, kann der Effekt der unterschiedlichen thermischen Trägheit unterstützt werden, da der Temperatursensor, der näher an der Wärmequelle angeordnet ist, einen rascheren Temperaturanstieg erfasst. Ist dieser Sensor derjenige mit der geringeren Trägheit, so unterstützen sich die beiden Effekte.

Die Erfindung besteht weiterhin in einem Verfahren zum Bereitstellen eines Überhitzungsschutzes für ein Heizgerät mit einer Wärmequelle und einem Wärmeträgerbereich, der von einen durch die Wärmequelle zu erwärmenden Wärmeträgermedium durchströmbar ist, einem ersten in dem Wärmeträgerbereich angeordneten Temperatursensor, der ein erstes Sensorsignal ausgibt, und einem zweiten in dem Wärmeträgerbereich angeordneten Temperatursensor, der ein zweites Sensorsignal ausgibt, wobei der erste Temperatursensor eine geringere thermische Trägheit als der zweite Temperatursensor aufweist, und die Temperatursensorenunterschiedliche Temperatur-Widerstands-Kennlinien besitzen, mit den Schritten: Ermitteln einer sich bei einem Temperaturanstieg aus einer Differenz zwischen dem ersten und dem zweiten Sensorsignal beziehungsweise zwischen von den Sensorsignalen abgeleiteten Größen ergebenden scheinbaren Temperaturdifferenz, Vergleichen der ermittelten Differenz mit einem Schwellenwert und Verringern der Heizleistung, wenn die Differenz größer ist als der Schwellenwert.

Die Erfindung wird nun mit Bezug auf die begleitenden Zeichnungen anhand besonders bevorzugter Ausführungsformen beispielhaft erläutert.

Es zeigt:

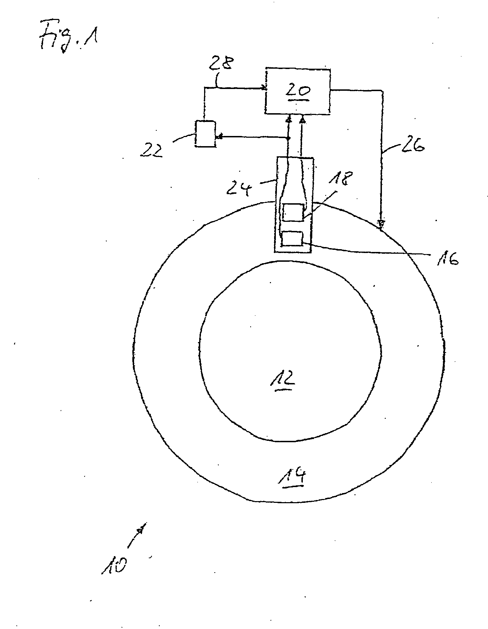

Figur 1 : eine schematische Darstellung eines Heizgerätes, bei dem gemäß der Erfindung ausgebildete Temperatursensoren verwendet werden und bei dem das erfindungsgemäße Verfahren durchgeführt werden kann..

Figur 1 zeigt ein Heizgerät 10, das schematisch in einer radialen Schnittansicht dargestellt ist, umfasst eine innenliegende Wärmequelle 12, das heißt einen Brenner und ein daran anschließendes Flammrohr, sowie einen die Wärmequelle 12 umgebenden Wärmeträgerbereich 14, der von einem Wärmeträgermedium durchströmbar ist. Der Wärmeträgerbereich 14 mit seinem ihn zur Wärmequelle abgrenzenden Innenmantel und seinem Außenmantel kann somit als Wärmetauscher bezeichnet werden. In dem Wärmeträgerbereich 14 ragt ein Gehäuse 24 hinein, in dem zwei Temperatursensoren 16, 18 angeordnet sind. Ein erster Temperatursensor 16 mit einer geringen thermischen Trägheit dient insbesondere als Überhitzungsschutz, während ein zweiter Temperatursensor 18 mit höherer thermischer Trägheit insbesondere im Rahmen der Steuerung beziehungsweise Regelung des Heizgerätes 10 eingesetzt wird. Die Temperatursensoren 16, 18 stehen mit einem Steuergerät 20 in Verbindung, das über eine Steuer- beziehungsweise Regelverbindung 26 Einfluss auf den Betrieb des Heizgerätes 10 nimmt. Eines der Sensorsignale, nämlich insbesondere das Signal des Temperatursensors 16 mit geringerer thermischer Trägheit wird einem Komparator 22 zugeführt, dessen Ausgangssignal 28 ebenfalls Einfluss auf den Betrieb des Heizgerätes nehmen kann, sei es, wie dargestellt, über das Steuergerät 20 oder direkt, beispielsweise durch Ansteuerung eines Schalters, der das Heizgerät 10 abschalten kann.

Im Hinblick auf den Überhitzungsschutz arbeitet das Heizgerät wie folgt. Steigt die Temperatur im Wärmeträgerbereich 14 ungewöhnlich rasch an, so zeigt das von dem Temperatursensor 16 mit geringerer thermischer Trägheit gelieferte Signal eher die richtigen Temperaturverhältnisse an als das von dem Temperatursensor 18 mit höherer thermischer Trägheit gelieferte Signal. Folglich wird eine Temperaturdifferenz nachgewiesen. Wenn diese einen Schwellenwert überschreitet, können mittels des Steuergeräts 20 Gegenmaßnahmen ausgelöst werden. Gleichzeitig werden die absoluten Temperaturwerte der Temperatursensoren 16, 18 mit Temperaturschwellen verglichen, um auch so einen Überhitzungsschutz zur Verfügung zu stellen. Zumindest das Temperatursignal des ersten Temperatursensors wird weiterhin einem Komparator 22 zugeführt, dessen Ausgangssignal 28 ebenfalls eine Notabschaltung bewirken kann. Die unterschiedliche Trägheit der Temperatursensoren 16, 18 wird im dargestellten Ausführungsbeispiel noch dadurch unterstützt, dass der weniger träge Temperatursensor 16 näher an der Wärmequelle 12 angeordnet ist als der trägere Temperatursensor 18. Folglich entsteht eine noch größere Differenz der Signale, die die Empfindlichkeit des beschriebenen Differenzauswertungsverfahren erhöht.

## Patentansprüche

1. Heizgerät (10) mit einer Wärmequelle (12) und einem Wärmeträgerbereich (14), der von einem durch die Wärmequelle zu erwärmenden Wärmeträgermedium durchströmbar ist, einem ersten in dem Wärmeträgerbereich angeordneten Temperatursensor (16), der ein erstes Sensorsignal ausgibt, und einem zweiten in dem Wärmeträgerbereich angeordneten Temperatursensor (18), der ein zweites Sensorsignal ausgibt, einer Einrichtung (20) zum Ermitteln einer Differenz zwischen dem ersten und dem zweiten Sensorsignal beziehungsweise zwischen von den Sensorsignalen abgeleiteten Größen, wobei der erste Temperatursensor (16) eine geringere thermische Trägheit als der zweite Temperatursensor (18) aufweist, **dadurch gekennzeichnet, dass** die Temperatursensoren unterschiedliche Temperatur-Widerstands-Kennlinien aufweisen.

2. Verfahren zum Bereitstellen eines Überhitzungsschutzes für ein Heizgerät (10) mit einer Wärmequelle (12) und einem Wärmeträgerbereich (14), der von einem durch die Wärmequelle zu erwärmenden Wärmeträgermedium durchströmbar ist, einem ersten in dem Wärmeträgerbereich angeordneten Temperatursensor (16), der ein erstes Sensorsignal ausgibt, und einem zweiten in dem Wärmeträgerbereich angeordneten Temperatursensor (18), der ein zweites Sensorsignal ausgibt, wobei der erste Temperatursensor eine geringere thermische Trägheit als der zweite Temperatursensor aufweist und die Temperatursensoren unterschiedliche Temperatur-Widerstands-Kennlinien besitzen, mit den Schritten:
Ermitteln einer sich bei einem Temperaturanstieg aus einer Differenz zwischen dem ersten und dem zweiten Sensorsignal beziehungsweise zwischen von den Sensorsignalen abgeleiteten Größen ergebenden scheinbaren Temperaturdifferenz,
Vergleichen der ermittelten Differenz mit einem Schwellenwert und
Verringern der Heizleistung, wenn die Differenz größer ist als der Schwellenwert.

## Claims

1. Heater (10) having a heat source (12) and a heat carrier area (14) through which a heat carrying medium can flow which is to be heated by said heat source, a first temperature sensor (16) being positioned in said heat carrier area and providing a first sensor signal, and a second temperature sensor (18) being positioned in said heat carrier area and providing a second sensor signal, means (20) for determining a difference between said first and said second sensor signals or between variables derived from said sensor signals, respectively, the first temperature sensor (16) having a smaller thermal inertia than the second temperature sensor (18), **characterized in that** said temperature sensors have different temperature-resistance characteristics.

2. A method for providing an overheating protection for a heater (10) having a heat source (12) and a heat carrier area (14) through which a heat carrying medium can flow which is to be heated by said heat source, a first temperature sensor (16) being positioned in said heat carrier area and providing a first sensor signal, and a second temperature sensor (18) being positioned in said heat carrier area and providing a second sensor signal, said first temperature sensor having a smaller thermal inertia than the second temperature sensor, and said temperature sensors having different temperature-resistance characteristics, said method comprising the following steps:
determining an apparent temperature difference which in cause of a temperature rise results from a difference between said first and said second sensor signals or between variables derived from said sensor signals,
comparing the determined difference with a threshold value, and
reducing the heating power in case that said difference is larger than said threshold value.

## Revendications

1. Appareil de chauffage (10) avec une source de chaleur (12) et une zone caloporteuse (14) où peut circuler un fluide caloporteur à chauffer par la source de chaleur, un premier capteur de température (16) disposé dans la zone caloporteuse qui émet un premier signal de capteur, et un deuxième capteur de température (18) disposé dans la zone caloporteuse qui émet un deuxième signal de capteur, un dispositif (20) de détection d'une différence entre le premier et le deuxième signal de capteur ou entre les grandeurs déduites des signaux de capteur, le premier capteur de température (16) présentant une inertie thermique inférieure à celle du deuxième capteur de température (18), **caractérisé en ce que** les capteurs de température présentent des courbes caractéristiques température-résistance différentes.

2. Procédé de réalisation d'une protection contre la surchauffe pour un appareil de chauffage (10) avec une source de chaleur (12) et une zone caloporteuse (14) où peut circuler un fluide caloporteur à chauffer par la source de chaleur, un premier capteur de température (16) disposé dans la zone caloporteuse qui émet un premier signal de capteur, et un deuxième capteur de température (18) disposé dans la zone caloporteuse qui émet un deuxième signal de capteur, le premier capteur de température présentant une inertie thermique inférieure à celle du deuxième capteur de température et les capteurs de température présentant des courbes caractéristiques température-résistance différentes, comprenant les étapes suivantes :
détermination d'un différentiel de température apparent résultant lors d'une montée de température d'une différence entre le premier et le deuxième signal de capteur ou entre les grandeurs déduites des signaux de capteur,
comparaison du différentiel déterminé avec une valeur limite, et
réduction de la puissance de chauffe si le différentiel est supérieur à la valeur limite.
